# EUROPÄISCHE PATENTANMELDUNG

(11) **EP 2 095 944 A1**
(43) Veröffentlichungstag der Anmeldung: **02.09.2009**
(21) Anmeldenummer: 09002785.5
(22) Anmeldetag: 26.02.2009
(51) Int. Cl.: B32B 27/36

(54) **Chipkarten und Verfahren zum Herstellen einer Chipkarte**

(30) Priorität: 28.02.2008 DE 102008011611
(71) Anmelder: Infineon Technologies AG, 85579 Neubiberg (DE)
(72) Erfinder: Houdeau, Detlef, Dr., 84085 Langquaid (DE); Mehlhaff, Andreas, 84034 Landshut (DE); Pueschner, Frank, 93309 Kelheim (DE); Stampka, Peter, 93133 Burglengenfeld (DE)

(57) **Zusammenfassung**

Eine Chipkarte weist einen Kartenkörper mit zumindest einer ersten, einer zweiten und einer dritten Schicht auf. Die erste und die zweite Schicht bestehen zumindest teilweise aus Polycarbonat. Die dritte Schicht ist zwischen der ersten und der zweiten Schicht angeordnet und besteht aus einem Material mit einer Schmelztemperatur von Tₛ < 150°C.

## Beschreibung

Ausführungsbeispiele der Erfindung beziehen sich auf Chipkarten mit einem Kartenkörper, der zumindest teilweise aus Polycarbonat besteht und auf ein Verfahren zum Herstellen einer solchen Chipkarte.

Chipkarten finden weltweit immer mehr Anwendungen. So sind Chipkarten beispielsweise schon lange als Speicherkarten für Telefonanwendungen bekannt. Mit zunehmender Rechenleistung und Speicherkapazität der Halbleiterchips finden Chipkarten aber vielfältige weitere Verwendungen, wie zum Beispiel als Krankenversichertenkarte oder als Personalausweis.

Insbesondere kontaktlose Chipkarten, bei denen die Energie- und Datenübertragung ohne galvanische Kopplung zwischen Karte und Terminal erfolgt, finden zunehmend Verwendung.

Die Materialien, der Aufbau und die Herstellung des Kartenkörpers werden im Wesentlichen durch Funktionselemente der Karten und durch die Belastung der Karte bei der Handhabung während der Anwendung bestimmt.

Für Anwendungen, bei denen hohe Festigkeit und Langlebigkeit gefordert ist, wird momentan häufig Polycarbonat (PC) eingesetzt. Es ist ein typisches Material für Ausweiskarten, weist allerdings eine hohe Spannungsrisskorrosionsempfindlichkeit auf.

Ausführungsbeispiele der vorliegenden Erfindung behandeln im Folgenden eine Chipkarte mit einem Kartenkörper, der Polycarbonat enthält und der eine geringere Spannungsrisskorrosionsempfindlichkeit als ein herkömmlicher Kartenkörper mit Polycarbonat aufweist und ein Verfahren zum Herstellen eines solchen Kartenkörpers.

Die Erfindung wird charakterisiert durch die unabhängigen Ansprüche. Weiterbildungen der Erfindung finden sich in den abhängigen Ansprüchen.

Ausführungsformen der Erfindung beziehen sich im Allgemeinen auf eine Chipkarte mit einem Kartenkörper, wobei der Kartenkörper zumindest eine erste, eine zweite und eine dritte Schicht aufweist. Die erste und die zweite Schicht bestehen zumindest teilweise aus Polycarbonat. Die dritte Schicht ist zwischen der ersten und der zweiten Schicht angeordnet und besteht aus einem Material mit einer Schmelztemperatur Tₛ < 150°C.

Weiterhin beziehen sich Ausführungsformen der Erfindung auf Verfahren zur Herstellung eines Kartenkörpers für eine Chipkarte, bei dem der Kartenkörper aus zumindest einer ersten, einer zweiten und einer dritten Schicht aufgebaut wird. Die erste und die zweite Schicht werden zumindest teilweise aus Polycarbonat hergestellt. Die dritte Schicht wird zwischen der ersten und der zweiten Schicht angeordnet und aus einem Material mit einer Schmelztemperatur von Tₛ < 150°C hergestellt.

Durch die Anordnung der dritten Schicht zwischen den beiden Polycarbonatschichten wird die Kerbempfindlichkeit des Kartenkörpers deutlich herabgesetzt. Die Verwendung der Zwischenschicht mit niedriger Schmelztemperatur ermöglicht einen Herstellungsprozess des Kartenkörpers mit niedrigen Temperaturen. Eigenspannungen, die durch Temperaturbeaufschlagungen hervorgerufen werden, können somit reduziert werden. Die Zwischenschicht kann außerdem als Stoppschicht für Mikrorisse in den Polycarbonatschichten dienen.

Ausführungsbeispiele der Erfindung werden nachfolgend, bezugnehmend auf die beiliegenden Figuren näher erläutert. Die Erfindung ist jedoch nicht auf die konkret beschriebenen Ausführungsformen beschränkt, sondern kann in geeigneter Weise modifiziert und abgewandelt werden. Es liegt im Rahmen der Erfindung, einzelne Merkmale und Merkmalskombinationen einer Ausführungsform mit Merkmalen und Merkmalskombinationen einer anderen Ausführungsform geeignet zu kombinieren, um zu weiteren erfindungsgemäßen Ausführungsformen zu gelangen.

Bevor im Folgenden die Ausführungsbeispiele der vorliegenden Erfindung anhand der Figuren näher erläutert werden, wird darauf hingewiesen, dass gleiche Elemente in den Figuren mit den gleichen oder ähnlichen Bezugszeichen versehen sind und dass eine wiederholte Beschreibung dieser Elemente weggelassen wird.

Fig. 1 zeigt in einer schematischen Querschnittsansicht eine Ausführungsform eines Teilausschnitts eines Chipkartenkörpers.

Fig. 2 zeigt in einer schematischen Querschnittsansicht eine Ausführungsform einer Chipkarte mit einem Chipkartenkörper und einem Halbleiterchip.

Fig. 3 zeigt in einer schematischen Querschnittsansicht eine Ausführungsform einer Chipkarte mit einem Chipkartenkörper und einem Halbleitermodul.

Fig. 4 zeigt in einer schematischen Querschnittsansicht einen Randbereich eines Chipmoduls für eine Chipkarte.

Fig. 5 zeigt in einer schematischen Querschnittsansicht ein Ausführungsbeispiel einer vorgefertigten Folie für einen Chipkartenkörper.

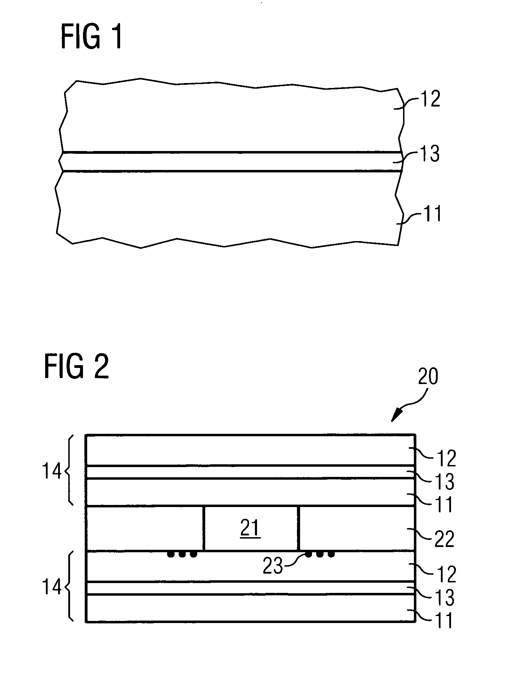

In Fig. 1 ist ein Teilausschnitt eines Chipkartenkörpers im Querschnitt dargestellt. Der Chipkartenkörper umfasst zumindest eine erste Schicht 11 und eine zweite Schicht 12, die mindestens teilweise aus Polycarbonat bestehen. Zwischen den beiden Polycarbonatschichten 11 und 12 ist eine dritte Schicht 13 angeordnet, die aus einem Material mit einer Schmelztemperatur von Tₛ < 150°C besteht.
Durch die Anordnung solch einer dritten Schicht 13 mit einer im Vergleich zu Polycarbonat niedrigen Schmelztemperatur, lassen sich Polycarbonatschichten mit Hilfe dieser Zwischenschicht 13 mit geringeren Temperaturbeaufschlagungen verbinden, als wenn die Polycarbonatschichten direkt miteinander verbunden werden müssen. Durch die niedrigere Schmelztemperatur der dritten Schicht 13 lassen sich die Polykarbonatschichten 11 und 12 zum Beispiel bei niedrigeren Temperaturen laminiertechnisch mit der dritten Schicht 13 verbinden. Die dritte Schicht 13 stellt somit eine Adhäsionsschicht zwischen 2 Polycarbonatschichten dar. Durch die geringere Temperaturbeaufschlagung bei der Herstellung des Kartenkörpers werden dementsprechend auch eventuell auftretende Eigenspannungen in der Polycarbonatschicht um einen Fremdkörper in der Polycarbonatschicht herum geringer ausfallen. Außerdem werden Eigenspannungsrisse, die sich normaler Weise in Polycarbonat aufgrund von Spannungsrisskorrosion fortpflanzen, an dieser dritten Schicht 13 gestoppt. Der Kartenkörper weist also eine geringere Kerbempfindlichkeit auf.

Als Material für die dritte Schicht 13 kommt beispielsweise ein Material zumindest aus einer der Gruppen von Polyethylenterephthalat(PET), wie z. B. amorphes PET (APET), PET mit Glykol (PET-G), PET mit Fluor (PET-F) und Polyvinylchlorid (PVC) in Frage.

Die dritte Schicht 13 kann eine Dicke im Bereich von 3 µm bis 10 µm haben. In möglichen Ausführungsformen kann zumindest eine der Polycarbonatschichten 11 oder 12 optisch transparent sein. Die dritte Schicht 13 kann in Ausführungsbeispielen einen oder eine Kombination der Zustände amorph, ungefärbt und transparent aufweisen. Sie kann aber auch einen oder eine Kombination der Zustände teilkristallin, ungefärbt und transluzent aufweisen. Des Weiteren kann die dritte Schicht auch eingefärbt sein, z. B. um den Kontrast auf der darüberliegenden Schicht zu erhöhen.

Die dritte Schicht 13 kann außerdem als Träger für optische Sicherheitsmerkmale wie zum Beispiel ein Hologramm, ein Kinegramm, ein Mikrotext, eine Mikro-Codierung (Barcode), eine oder mehrere Reflexionsschichten (z. B. bei Displays) dienen und/oder Träger für elektronische Sicherheitsmerkmale sein (z. B. eine strukturierte Metallfolie in Form eines Sicherheitsfadens oder in Form einer geschlossenen Antenne).

Fig. 2 stellt ein Ausführungsbeispiel einer Chipkarte 20 dar. Die Chipkarte 20 weist einen Kartenkörper auf, der sich aus zwei Schichtstapel 14 und einer Zwischenfolie 22 zwischen den beiden Schichtstapeln 14 zusammensetzt. Der Schichtstapel 14 setzt sich dabei, wie bereits zu Fig. 1 erläutert, aus 2 Polycarbonatschichten 11 und 12 und einer dazwischen liegenden dritten Schicht 13 zusammen.

Die zwischen den beiden Schichtstapeln 14 angeordnete Zwischenfolie 22 kann ebenfalls zumindest teilweise aus Polycarbonat bestehen. Die Zwischenfolie 22 weist in dem gezeigten Ausführungsbeispiel eine Unterbrechung auf, in der ein Halbleiterchip 21, beispielsweise ein Mikrokontroller, ebenfalls zwischen den beiden Schichtstapeln 14 angeordnet ist. Der Halbleiterchip 21 ist somit in dem Kartenkörper angeordnet und wird in dem gezeigten Beispiel vollständig von dem Kartenkörper umhüllt.

Außerdem ist in Fig. 2 eine Antenne 23 dargestellt, die in dem Halbleiterkörper angeordnet ist. Die Antenne kann zum Beispiel in einer Polycarbonatschicht des Schichtstapels 14 eingebracht sein. Die in Fig. 2 gezeigte Ausführungsform sieht eine Spulenantenne vor, über deren Spulenauge der Halbleiterchip 21 angeordnet ist. Der Halbleiterchip 21 wird in der Regel mit der Antenne 23 verbunden sein, um eine Energie- und/oder Datenübertragung mit externen Terminals zu ermöglichen.

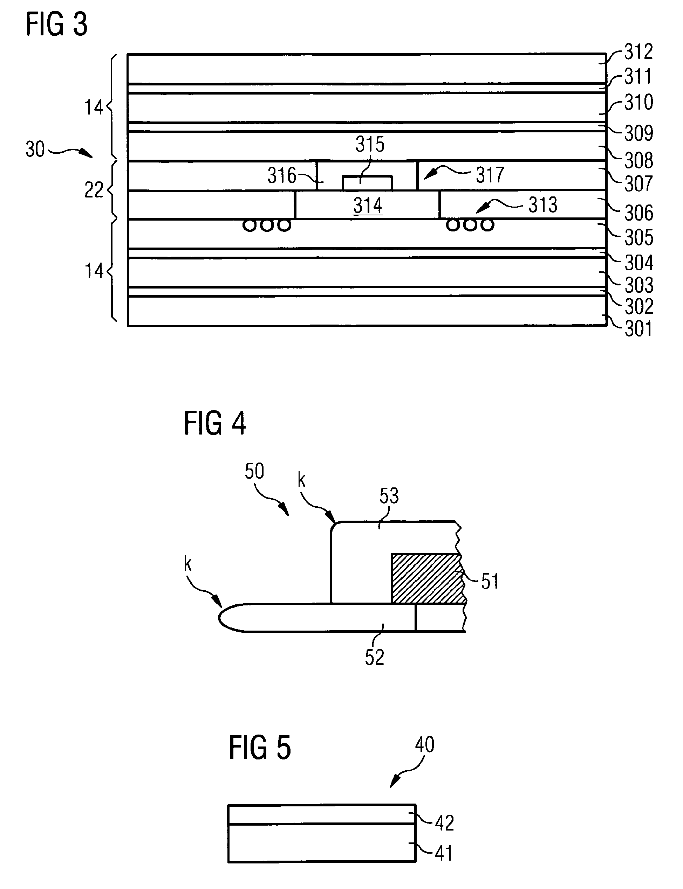

Fig. 3 zeigt ein weiteres Ausführungsbeispiel einer Chipkarte 30 mit einem Chipkartenkörper und einem Halbleitermodul. Der Chipkartenkörper dieses Ausführungsbeispiels setzt sich ebenfalls zusammen aus zwei Schichtstapel 14 und einer zwischen den beiden Schichtstapeln 14 angeordneten Zwischenfolie 22. Ein Schichtstapel 14 weist in Fig. 3 drei Polycarbonatschichten 301, 303, 305 bzw. 308, 310, 312 mit jeweils zwischen zwei Polykarbonatschichten angeordneten dritten Schichten 302, 304 bzw. 309 und 311 auf. Durch diese Anordnung kann, wie bereits zu Fig. 1 erläutert, aufgrund von geringerer Temperaturbeaufschlagung während des Laminiervorgangs bei der Herstellung des Schichtstapels 14 und durch die Stoppfunktion der dritten Schichten für Mikrorisse der Kartenkörper kerbunempfindlicher gemacht werden.

Die Zwischenfolie 22 kann, wie in Fig. 3 dargestellt, aus mehreren Einzelschichten 306, 307 zusammengesetzt sein. Dies ermöglicht beispielsweise die formgenaue Anpassung der Zwischenfolie 22 an einen Halbleiterchip oder, wie in Fig. 3 dargestellt, an ein Halbleiterchipmodul 317.

Das Halbleiterchipmodul 317 umfasst beispielsweise einen Chipträger 314, einen Halbleiterchip 315 und ein Gehäuse 316 für den Halbleiterchip 315. Das Halbleiterchipmodul 317 ist in einer Unterbrechung der Zwischenfolie 22 zwischen den beiden Schichtstapeln 14 angeordnet. Somit ist das Halbleiterchipmodul 317 ebenfalls in dem Halbleiterkörper angeordnet und wird von dem Halbleiterkörper vollständig umhüllt.

In dem dargestellten Ausführungsbeispiel der Fig. 3 ist eine Antenne 313 in dem Halbleiterkörper angeordnet. Die Antenne kann, wie bereits in Fig. 2 erläutert, beispielsweise eine Spulenantenne sein, die in einer Polycarbonatschicht eingelassen ist. Das Halbleiterchipmodul 317 befindet sich über dem Spulenauge zwischen den Spulensträngen der Antenne und wird in der Regel mit den zwei Enden der Spulenantenne verbunden, um den Energie- und Datenaustausch zwischen dem Halbleiterchip 315 und einem externen Terminal zu ermöglichen.

Fig. 4 zeigt eine mögliche Ausführungsform eines Halbleiterchipmoduls. Der dargestellte Randbereich eines Halbleiterchipmoduls 50 umfasst einen Halbleiterchipträger 52, z. B. ein Leadframe, einen Halbleiterchip 51 auf dem Chipträger 52 und ein Gehäuse 53 für den Halbleiterchip 51. Die Kanten K dieses beispielhaften Halbleiterchipmoduls 50 sind dabei abgerundet. Durch diese Ausführungsform werden kritische Stellen für Spannungsrissbildung in den das Halbleiterchipmodul 50 umgebenden Polycarbonatschichten entschärft, weil durch die abgerundeten Kanten der Kerbeffekt in den Polycarbonatschichten vermindert wird. Die Kantenverrundung weist dabei einen Kantenradius r mit r ≥ 0,1 mm auf.

Fig. 5 zeigt eine Verbundfolie 40, die für eine Herstellungsvariante des Kartenkörpers einer erfindungsgemäßen Chipkarte verwendet werden kann. Die Verbundfolie 40 wird aus einer ersten Schicht 41, die zumindest teilweise aus Polycarbonat besteht und einer dritten Schicht 42, die aus einem Material mit einer Schmelztemperatur von Tₛ < 150°C besteht, zusammengesetzt. Die Verbundfolie kann als vorgefertigtes Produkt für die Herstellung des Kartenkörpers der vorher beschriebenen Chipkarten verwendet werden.

Die Verbundfolie 40 kann derart hergestellt werden, dass die dritte Schicht 42 auf die erste Schicht 41 auflaminiert wird. Eine weitere Möglichkeit zur Herstellung der Verbundfolie 40 besteht darin, dass die erste Schicht 41 und die dritte Schicht 42 koextrudiert werden, dass heißt die Materialien der ersten Schicht 41 und der dritten Schicht 42 vor dem Verlassen einer Profildüse zusammengeführt werden und somit aus der Profildüse eine Verbundfolie, wie in Fig. 5 dargestellt, austritt.

## Patentansprüche

1. Chipkarte mit
- einem Kartenkörper, wobei der Kartenkörper zumindest eine erste, eine zweite und eine dritte Schicht aufweist, wobei die erste und die zweite Schicht zumindest teilweise aus Polycarbonat besteht und wobei die dritte Schicht zwischen der ersten und der zweiten Schicht angeordnet ist und aus einem Material mit einer Schmelztemperatur von Tₛ < 150°C besteht.

2. Chipkarte nach Anspruch 1, bei dem die dritte Schicht eine Dicke im Bereich von 3 µm bis 10 µm aufweist.

3. Chipkarte nach Anspruch 1 oder 2, bei dem das Material der dritten Schicht zumindest aus einer Gruppe der Materialien PET, PVC, APET, PET-G, PET-F entnommen ist.

4. Chipkarte nach einem der vorhergehenden Ansprüche, bei dem ein Halbleiterchip in dem Kartenkörper angeordnet ist.

5. Chipkarte nach Anspruch 4, bei dem der Halbleiterchip vollständig von dem Kartenkörper umhüllt ist.

6. Chipkarte nach einem der vorhergehenden Ansprüche, bei, dem eine Antenne in dem Kartenkörper angeordnet ist.

7. Chipkarte nach Anspruch 4, bei dem der Halbleiterchip Teil eines Halbleitermoduls ist, wobei das Halbleitermodul einen Träger für den Halbleiterchip und ein Gehäuse für den Halbleiterchip aufweist.

8. Chipkarte nach Anspruch 7, bei dem das Halbleitermodul abgerundete Kanten aufweist.

9. Chipkarte nach Anspruch 8, bei dem die Kanten einen Kantenradius r ≥ 0,1 mm aufweist.

10. Chipkarte nach einem der vorhergehenden Ansprüche, bei dem zumindest die erste oder die zweite Schicht optisch transparent ist.

11. Chipkarte nach Anspruch 10, bei dem die dritte Schicht Träger für optische Sicherheitsmerkmale ist.

12. Chipkarte nach Anspruch 10 oder 11, bei dem die dritte Schicht zumindest in Teilbereichen optisch transparent ist.

13. Chipkarte nach Anspruch 12, bei dem die dritte Schicht Träger für optische Sicherheitsmerkmale ist.

14. Chipkarte nach einem der vorhergehenden Ansprüche, bei dem die dritte Schicht Träger von elektronischen Sicherheitsmerkmalen ist.

15. Verfahren zum Herstellen eines Kartenkörpers für eine Chipkarte, bei dem der Kartenkörper aus zumindest einer ersten, einer zweiten und einer dritten Schicht aufgebaut wird, wobei die erste und die zweite Schicht zumindest teilweise aus Polycarbonat hergestellt wird und die dritte Schicht aus einem Material mit einer Schmelztemperatur von Tₛ < 150°C hergestellt und zwischen der ersten und der zweiten Schicht angeordnet wird.

16. Verfahren nach Anspruch 14, bei dem zumindest die zweite Schicht auf die dritte Schicht laminiert wird.

17. Verfahren nach Anspruch 15 oder 16, bei dem die erste und die dritte Schicht als Verbundfolie bereitgestellt werden.

18. Verfahren nach einem der Ansprüche 15 bis 17, bei dem die dritte Schicht auf die erste Schicht laminiert wird.

19. Verfahren nach einem der Ansprüche 15 bis 17, bei dem die erste Schicht und die dritte Schicht koextrudiert werden.

20. Verfahren nach einem der vorhergehenden Ansprüche, bei dem ein Halbleiterchip in den Kartenkörper eingebracht wird.

21. Verfahren nach Anspruch 20, bei dem der Halbleiterchip vollständig in den Kartenkörper eingebracht wird, so dass der Kartenkörper den Halbleiterchip vollständig umhüllt.

22. Verfahren nach einem der Ansprüche 15 bis 20, bei dem an zwei gegenüberliegenden Seiten eines Halbleiterchips ein Schichtstapel erzeugt wird, wobei der Schichtstapel zumindest eine erste Schicht, eine zweite Schicht und eine dritte Schicht aufweist und wobei die erste und die zweite Schicht zumindest teilweise aus Polycarbonat hergestellt wird und die dritte Schicht aus einem Material mit einer Schmelztemperatur von Tₛ < 150°C zwischen der ersten und der zweiten Schicht angeordnet wird.
